# FASCICULE DE BREVET EUROPEEN

(11) **EP 2 076 952 B1**
(45) Date de publication et mention de la délivrance du brevet: **06.09.2017**
(21) Numéro de dépôt: 07821838.5
(22) Date de dépôt: 25.10.2007
(51) Int. Cl.: H02J 3/02, H02J 4/00, B64D 41/00

(54) **SYSTÈME DE GÉNÉRATION, CONVERSION, DISTRIBUTION ET DÉMARRAGE ÉLECTRIQUE À BORD D'UN AÉRONEF**
SYSTEM ZUM ERZEUGEN, UMRICHTEN, VERTEILEN UND ELEKTRISCHEN STARTEN AN BORD EINES FLUGZEUGS
SYSTEM FOR ON-BOARD GENERATION, CONVERTION, DISTRIBUTION AND ELECTRICALLY STARTING AN AIRCRAFT

(30) Priorité: 27.10.2006 FR 0654589
(43) Date de publication de la demande: 08.07.2009
(73) Titulaire: AIRBUS OPERATIONS, 31060 Toulouse (FR)
(72) Inventeur: DUCES, Marc, 31300 Toulouse (FR); LANDO, Jean-Louis, 09700 Saverdun (FR); FOCH, Etienne, 31000 Toulouse (FR)
(74) Mandataire: Ilgart, Jean-Christophe
(86) Numéro de dépôt international: PCT/EP2007/061475
(87) Numéro de publication internationale: WO 2008/049886

(56) Documents cités:
- EP-A- 0 409 226
- EP-A- 1 679 784
- WO-A-2004/037641
- FR-A- 2 882 200
- US-A- 5 233 286
- US-A1- 2006 061 213
- US-B1- 6 807 076
- "AUTOMATED POWER-DISTRIBUTION SYSTEM" NTIS TECH NOTES, US DEPARTMENT OF COMMERCE. SPRINGFIELD, VA, US, 1 février 1991 (1991-02-01), page 128,1,2, XP000224742 ISSN: 0889-8464
- NIGGEMAN R E ET AL: "270-VDC/hybrid 115-VAC electric power generating system technology demonstrator" AEROSPACE AND ELECTRONICS CONFERENCE, 1991. NAECON 1991., PROCEEDINGS OF THE IEEE 1991 NATIONAL DAYTON, OH, USA 20-24 MAY 1991, NEW YORK, NY, USA,IEEE, US, 20 mai 1991 (1991-05-20), pages 448-454, XP010048147 ISBN: 0-7803-0085-8

## Description

### DOMAINE TECHNIQUE

L'invention concerne un système de génération, conversion, distribution et démarrage électrique à bord d'un aéronef.

Avantageusement cet aéronef est un avion dans lequel les systèmes non propulsifs sont alimentés principalement par de la puissance électrique, un tel avion étant dit « bleedless » c'est-à-dire à architecture électrique de puissance sans réseau pneumatique.

Dans la suite de la description, pour des raisons de simplification, on considère, à titre d'exemple un aéronef de type avion de type « bleedless ».

### ÉTAT DE LA TECHNIQUE ANTÉRIEURE

Les systèmes non-propulsifs des avions de l'art connu sont alimentés par trois réseaux de puissance prélevée sur les réacteurs : un réseau de puissance hydraulique, un réseau de puissance électrique, et un réseau de puissance pneumatique.

La puissance hydraulique sert principalement à alimenter les actionneurs des commandes de vol primaires et secondaires, les systèmes d'extension et de rétraction des trains d'atterrissage, de guidage de la roue avant et de freinage.

La puissance électrique sert principalement à alimenter les charges techniques comme l'avionique, l'éclairage, les pompes carburants, divers ventilateurs et les charges commerciales comme les offices (zones cuisines ou « galleys ») et les systèmes de divertissement des passagers.

La puissance pneumatique sert principalement à alimenter le système de pressurisation et de conditionnement d'air de la cabine, le système de protection de la voilure et des nacelles contre le givre et le démarrage des moteurs.

Récemment, de nouvelles architectures de systèmes non-propulsifs nécessitant une utilisation plus importante de l'électricité sont apparues dans le cadre de projets de recherche ou d'études avant-projets. Ainsi :
- un circuit hydraulique et les servocommandes qui lui sont associées peuvent être remplacés par des actionneurs électriques.
- Le prélèvement d'air moteur alimentant les unités (« packs ») de conditionnement d'air et le dégivrage de la voilure peut être supprimé et remplacé par une génération électrique plus puissante.

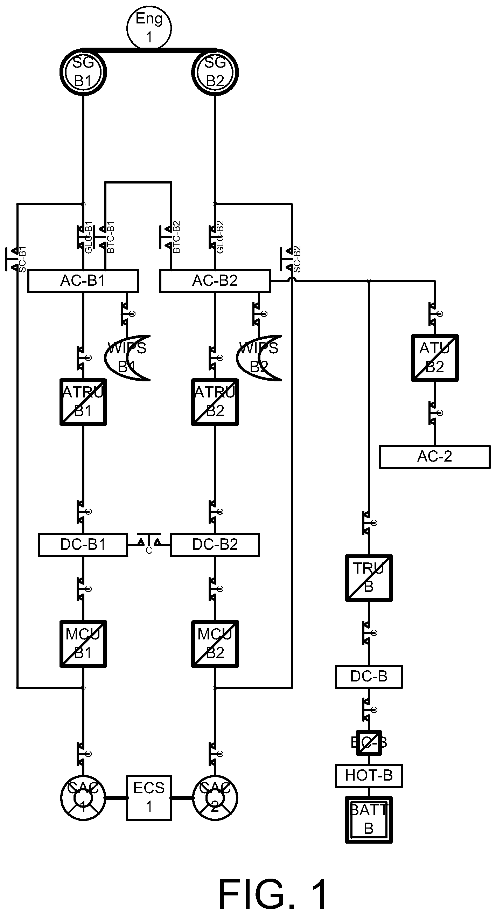

Dans ce dernier cas, l'architecture est dite « bleedless ». Elle est décrite comparativement à une architecture conventionnelle avion dans le document référencé [1] en fin de description. Comme illustré à la figure 1, cette architecture « bleedless » comprend notamment les équipements suivants :
- deux générateurs-démarreurs SG-B1 et SG-B2, entraînés par le même réacteur Eng-1, qui alimentent chacun une barre de distribution AC-B1 ou AC-B2 de tension triphasée alternative de 230 volts à fréquence variable entre 360 et 800Hz,
- ces barres de distribution AC-B1 et AC-B2, qui distribuent directement la puissance des générateurs-démarreurs à des charges triphasées équilibrées alimentées en 230 volts alternatif, par exemple des résistances chauffantes pour éviter la formation de givre sur les bords d'attaque de la voilure, symbolisées par deux demi-lunes WIPS-B1 et WIPS-B2,
- un autotransformateur ATU-B2, qui convertit le 230 volts alternatif en 115 volts alternatif pour alimenter des charges 115 volts triphasées ou monophasées, usuellement de plus faible puissance que les charges 230 volts, via une barre de distribution AC-2,
- des auto-transformateurs-redresseurs ATRU-B1 et ATRU-B2, qui convertissent la tension 230 volts triphasée alternative des barres de distribution AC-B1 et AC-B2 en une tension continue de +/-270 volts diphasé sur les barres de distribution DC-B1 et DC-B2,
- des onduleurs MCU-B1 et MCU-B2 connectés aux bus haute tension continue +/-270 volts, qui alimentent et pilotent en tension et courant des moteurs-compresseurs électriques CAC-1 et CAC-2 du système de conditionnement d'air ECS1, pour réguler leur vitesse et leur couple,
- un transformateur-redresseur TRU-B convertissant le 230 volts alternatif triphasé en 28 volts continu monophasé alimentant des charges avioniques de faible puissance via la barre de distribution DC-B,
- un chargeur de batterie BC-B et une batterie B, reliés à une barre de distribution HOT-B toujours alimentée par la batterie.

Sur cette figure 1, ainsi que sur les figures suivantes, les composants référencés, par exemple, SC-B1, SC-B2...sont des contacteurs permettant de réaliser ou non les liaisons entre les différents éléments définis ci-dessus.

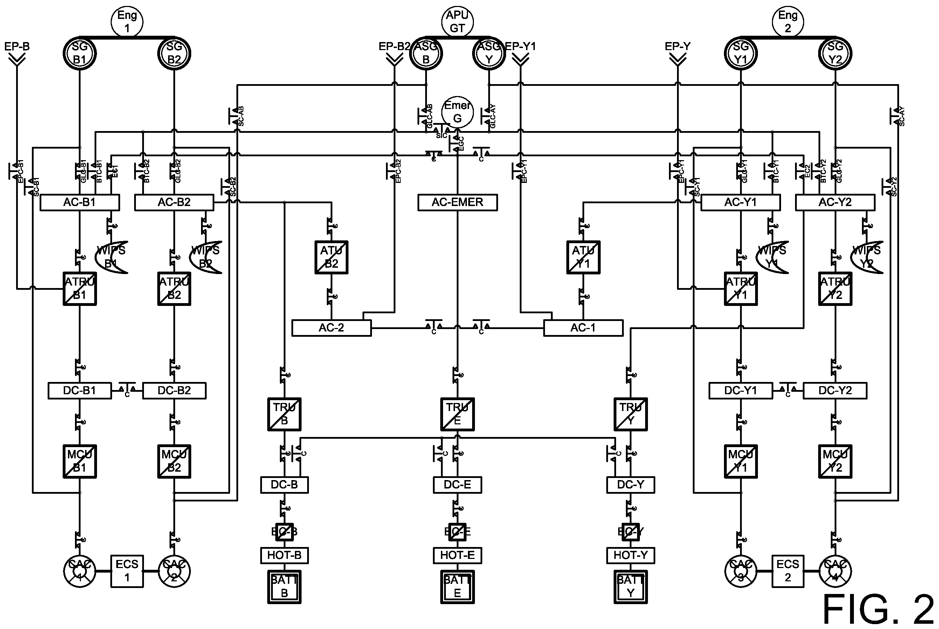

De manière schématique, la génération électrique principale de ce système de l'art connu est basée, dans le cas d'un avion biréacteur tel qu'illustrée sur la figure 2, sur quatre canaux de distribution B1, B2, Y1 et Y2 mélangeant les charges électriques dites « conventionnelles », et les nouvelles charges électriques dites de « puissance », spécifiques aux avions « bleedless ». Cette génération reprend les éléments de l'architecture illustrés sur la figure 1 ainsi que d'autres éléments ayant le même objet que ces éléments et qui sont référencés de façon analogue. Cette figure illustre également deux générateurs-démarreurs ASG-B et ASG-Y entraînés par le groupe de puissance auxiliaire APU-GT. Ces deux générateurs-démarreurs auxiliaires peuvent alimenter les barres de distribution AC-B1, AC-B2, AC-Y1 et AC-Y2 lorsque les générateurs-démarreurs principaux ne sont pas disponibles. Un générateur de secours Emer-G entraîné par une éolienne (RAT ou « Ram Air Turbine ») peut alimenter, en cas de perte de la génération principale, la barre de distribution AC-EMER, un transformateur-redresseur TRU-E étant disposé entre cette barre de distribution AC-EMER et une barre de distribution de courant continu DC-E.

Sur cette figure 2, les entrées EP-B, EP-B2, EP-Y1 et EP-Y sont des prises de parc pour connecter au sol des groupes de puissance électrique externes.

Ce système de génération, conversion et distribution électrique de l'art connu est, ci-dessous, intitulé « 4M », M pour « mixte » en référence aux quatre canaux B1, B2, Y1 et Y2 mixant charges de puissance et charges conventionnelles.

L'architecture de ce système « 4M » de l'art antérieur, présente le principal inconvénient de nécessiter des équipements électriques lourds principalement à cause des contraintes de qualité de la puissance électrique imposées par les normes aéronautiques ou bien par les directives actuelles des avionneurs.

Ainsi, les contraintes actuelles de faible taux de réjection harmonique imposent, par exemple pour réaliser la conversion du 230 volts alternatif triphasé en +/-270 volts continu, l'utilisation d'un auto-transformateur-redresseur dit « ATRU » composé d'un auto-transformateur à déphasage de 40 degrés, tel que décrit dans document référencé [2], et d'un pont-redresseur à dix-huit diodes, tel que décrit dans le document référencé [3].

De plus, les contraintes actuelles imposent l'utilisation d'importants éléments de filtrage passif tels que des inductances et des condensateurs, en entrée et en sortie des équipements électriques tels que les générateurs, les convertisseurs électroniques de puissance, les onduleurs et les charges électriques. De tels éléments de filtrage sont nécessaires afin que les harmoniques générés par les charges de puissance (conditionnement d'air...) ne perturbent pas les charges conventionnelles.

Par ailleurs, le réseau électrique d'une telle architecture « 4M », dont la tension principale est 230 volts alternatif, nécessite une conversion de la puissance délivrée par les groupes de parc externes, actuellement en 115 volts alternatif. Les solutions de l'art antérieur proposent une conversion spécifique via les autotransformateurs entre les barres 230 volts alternatif et 115 volts alternatif ou via les enroulements de l'auto-transformateur interne au redresseur « ATRU ».

Ainsi, l'augmentation des systèmes électriques dans les nouveaux avions impose de redéfinir l'architecture du réseau électrique car les tensions actuelles 115 volts alternatif et 28 volts continu ne sont plus adaptées aux besoins de puissance. Une démarche logique consiste à augmenter les tensions et utiliser des redresseurs et onduleurs pour entraîner et contrôler la rotation des moteurs électriques. Cependant l'architecture correspondant à une telle solution cause d'importantes pénalités de masses au niveau avion.

L'invention a donc pour objet de proposer un concept d'architecture plus légère grâce à la séparation entre les charges générant une pollution harmonique et les charges requérant une bonne qualité de tension. Le document WO 2004/037641 A décrit un système de génération, conversion distribution et démarrage électrique à bord d'un aéronef, caractérisé en ce que les canaux de distribution de puissance et les canaux de distribution électrique pour charges conventionnelles sont séparés et sont alimentées par générateurs distincts entraînes par les réacteurs (le système est dupliqué sur les deux réacteurs de l'aéronef).

### EXPOSÉ DE L'INVENTION

Les caractéristiques de l'invention sont plus particulièrement mises en évidence dans la revendication indépendante 1 en fin de description.

L'invention concerne un système de génération, conversion, distribution et démarrage électrique à bord d'un aéronef, par exemple un avion, de type « bleedless » c'est-à-dire à architecture électrique de puissance sans réseau pneumatique, caractérisé en ce que les canaux de distribution électrique pour charges de fortes puissance spécifiques aux aéronefs de type « bleedless » et les canaux de distribution électrique pour charges conventionnelles comprenant les charges techniques, telles que l'avionique, l'éclairage et les pompes carburants et les charges commerciales sont séparés et sont alimentés par des générateurs distincts entraînés par les réacteurs de l'aéronef.

Dans des modes de réalisation avantageux ce système comprend :
- au moins deux premiers canaux de distribution électrique pour charges de forte puissance, et
- au moins deux seconds canaux de distribution électrique pour charges conventionnelles.

Avantageusement chaque premier canal est un système alternatif triphasé en 115 volts ou 230 volts. La fréquence peut être comprise entre 360 et 800 Hz, ou entre 800 Hz et 2000 Hz.

Avantageusement la fréquence pour les canaux de puissance est comprise entre 800 Hz et 2 KHz et la fréquence pour les canaux conventionnels est comprise entre 360 Hz et 800 Hz.

Avantageusement chaque générateur pour un tel premier canal est une machine polyphasée dont le nombre de phases est supérieur ou égal à trois, préférablement égal à cinq ou à six. Chaque premier canal comprend un ou deux ponts redresseurs polyphasés à six diodes ou plus pour passer de 230 volts alternatif triphasé à +/- 270 volts continu.

Avantageusement tous les générateurs peuvent être identiques. Chaque générateur est un générateur synchrone triphasé sans balai réversible ou non délivrant du 115 volts ou 230 volts alternatif avec une fréquence comprise entre 360 Hz et 800 Hz.

Dans un premier exemple réalisation (architecture « 2P2C ») le système de l'invention comprend :
- deux canaux de distribution électrique pour charges de forte puissance,
- deux canaux de distribution électrique pour charges conventionnelles.

Chaque canal de distribution électrique pour charges de forte puissance comprend :
- un générateur-démarreur électrique,
- deux ponts redresseurs simples à six diodes avec un filtrage réduit,
- deux premières barres de distribution en courant continu,
- deux onduleurs à filtrage réduit,
- un transformateur-redresseur,
- une seconde barre de distribution en courant continu,
- une batterie.

Chaque canal de distribution électrique pour charges conventionnelles comprend :
- un générateur-démarreur électrique,
- une première barre de distribution de courant alternatif,
- un convertisseur,
- une seconde barre de distribution de courant alternatif.

Ce système comprend avantageusement :
- un premier coeur regroupant deux premiers canaux de puissance,
- un second coeur regroupant deux seconds canaux de puissance,
- un troisième coeur regroupant des canaux conventionnels en 230 volts et 115 volts alternatif, et des réseaux 28 volts continus, et
- un coeur de secours.

Dans un second exemple de réalisation (architecture « 4P2C ») ce système de l'invention comprend :
- quatre canaux de distribution électrique pour charges de forte puissance,
- deux canaux de distribution électrique pour charges conventionnelles.

Il comprend six générateurs-démarreurs identiques, et deux auto-transformateurs.

Il comprend avantageusement :
- un premier coeur regroupant deux premiers canaux de puissance,
- un second coeur regroupant deux seconds canaux de puissance,
- un troisième coeur regroupant les canaux conventionnels en 230 volts et 115 volts alternatif, et les réseaux 28 volts continus, et
- un coeur de secours.

Avantageusement il comprend un croisement entre générateur-démarreurs et coeurs correspondants en des positions différentes dans le fuselage.

Dans un troisième exemple de réalisation (architecture « 4P*2C »), le système de l'invention comprend :
- quatre canaux de distribution électrique optimisés pour charges de forte puissance,
- deux canaux de distribution électrique pour charges conventionnelles.

Avantageusement, il comprend quatre générateurs-démarreurs de puissance dédiés aux canaux de puissance optimisés et deux générateurs conventionnels. Avantageusement l'étage principal des générateurs-démarreurs comprend un alternateur synchrone polyphasé dont le nombre de phases est supérieur ou égal à trois, notamment les cas cinq ou six phases, cet étage principal pouvant aussi être composé de deux systèmes triphasés de 30°. Les générateurs conventionnels peuvent être des machines synchrones triphasés sans balai à trois étages. On utilise une gamme de fréquence variable située entre 800 à 2000 Hz pour les canaux de distribution électrique optimisés pour charges de forte puissance.

Ce système comprend avantageusement :
- un premier coeur regroupant deux canaux de puissance, une barre de distribution continu et un onduleur triphasé,
- un second coeur regroupant deux canaux de puissance, une barre de distribution continu et un onduleur triphasé,
- un premier demi-coeur regroupant des barres de distribution techniques en 115 volts alternatif et des barres de distribution commerciales,
- un second demi-coeur regroupant des barres techniques en 115 volts alternatif et des barres de distribution commerciales,
- un troisième demi-coeur regroupant des barres de distribution, des convertisseurs de puissance, et un transformateur-redresseur,
- un quatrième demi-coeur regroupant des barres de distribution, des convertisseurs de puissance, et un transformateur-redresseur.

Par rapport aux systèmes de l'art connu, le système de l'invention présente les caractéristiques avantageuses suivantes :
- une architecture de génération et conversion de puissance électrique séparant, suivant des canaux de distribution distincts, les charges générant de la pollution harmonique et les charges requérant une bonne qualité de tension,
- une architecture de génération et conversion de puissance électrique augmentant la fiabilité, la sécurité et la disponibilité grâce à un nombre plus élevé de sources de puissance électrique principale pour assurer une meilleure ségrégation des canaux de distribution et une meilleure redondance,
- la ségrégation et les reconfigurations du système de génération, démarrage, conversion et distribution électrique suivant trois circuits électriques distincts « bleu », « vert » et « jaune » chacun décomposé en deux sous-circuits, le premier étant alimenté par un premier réacteur et le second sous-circuit étant alimenté par un second réacteur,
- une architecture de génération et conversion de puissance électrique assurant une dissimilarité technologique des sources de puissance électrique principale pour une meilleure sécurité de l'alimentation des charges critiques,
- l'utilisation de générateurs-démarreurs électriques à fréquence plus élevée pour augmenter la puissance massique et pour réduire les volumes par rapport aux générateurs électriques actuels (IDG (ou « Integrated Driven Generator »), VSCF (ou « Variable Speed Constant Frequency »), VFG (ou « Variable Frequency Generator »), VFSG (ou « Variable Frequency Starter Generator »)),
- la réduction de la masse du générateur-démarreur de chaque canal de puissance grâce à la relaxation des contraintes de conception vis-à-vis de la qualité de la tension du réseau,
- la réduction de la masse des éléments de filtrage associés aux redresseurs et onduleurs électroniques de puissance grâce à la séparation entre « canal de puissance » avec électronique de puissance polluante et « canal conventionnel » avec charges requérant une bonne qualité de la puissance électrique,
- la réduction de la masse des éléments de filtrage associés aux redresseurs et onduleurs électroniques de puissance grâce à une gamme de fréquences plus élevée de la tension générée par les générateurs-démarreurs à vitesse plus élevée,
- l'utilisation de ponts redresseurs simples et légers avec filtrage réduit, en lieu et place des convertisseurs ATRU (« Auto-Transformer-Rectifier-Unit ») lourds et complexes,
- l'augmentation de la puissance massique des générateurs électriques entraînés par le groupe de puissance auxiliaire grâce au choix d'une vitesse de rotation plus élevée,
- l'utilisation dans une architecture avion viable de générateurs-démarreurs constitués de machines synchrones polyphasées dont le nombre de phases est supérieur à trois.

### BRÈVE DESCRIPTION DES DESSINS

La figure 1 est une représentation schématique d'un réseau de puissance électrique associé à un moteur conformément à une architecture « 4M » de l'art antérieur.
La figure 2 est une représentation schématique d'un système de génération, conversion, distribution et démarrage électrique en accord avec une architecture « 4M » de l'art antérieur.
La figure 3 est une représentation schématique du réseau de puissance électrique associé à un moteur, conformément à un premier exemple de réalisation de l'architecture de l'invention.
La figure 4 est une représentation schématique de ce premier exemple de réalisation de l'architecture « 2P2C » de l'invention.
La figure 5 est une représentation schématique d'un second exemple de réalisation d'une architecture de l'invention : l'architecture « 4P2C ».
La figure 6 est une représentation schématique d'un troisième exemple de réalisation d'une architecture de l'invention : l'architecture « 4P*2C ».

### EXPOSÉ DÉTAILLÉ DE MODES DE RÉALISATION PARTICULIERS

Le système de génération, conversion, distribution et démarrage électrique, à bord d'un avion, de l'invention utilise des canaux de distribution électrique distincts pour les charges de puissance d'une part et pour les charges conventionnelles d'autre part. Ces canaux distincts sont alimentés par des générateurs distincts entraînés par les moteurs de l'avion. Toutefois, un même moteur peut entraîner plusieurs générateurs.

Par rapport à l'architecture « 4M » de l'art connu, décrite ci-dessus, la séparation suivant des canaux de distribution électrique distincts des charges générant une pollution harmonique et des charges requérant une bonne qualité de tension permet de s'affranchir, pour le canal de puissance, des contraintes de filtrage imposées par les charges conventionnelles, déjà présentes sur les avions existants.

Ce système est constitué, dans le cas d'un avion bimoteur, de :
- un ou plusieurs canaux de distribution électrique pour charges de forte puissance notés « P »,
- un ou plusieurs canaux de distribution électrique pour charges conventionnelles notés « C ».

Ainsi des exemples de réalisation d'une telle nouvelle architecture sont nommés dans la suite, selon le nombre de canaux de puissance et de canaux conventionnels : « 2P2C », « 4P2C », et « 4P*2C ».

Le système de l'invention permet de réduire la masse globale du système électrique et le nombre des équipements électriques dans un avion à savoir : les générateurs-démarreurs principaux et auxiliaires, les convertisseurs statiques électroniques de puissance, les redresseurs, les onduleurs, les transformateurs, en réduisant leurs éléments de filtrage associés.

Différents modes de réalisation du système de l'invention et des équipements utilisés vont être analysés ci-dessous. Ces modes de réalisation concernent :
- une architecture de canal de puissance,
- une génération pour le canal de puissance,
- des convertisseurs pour le canal de puissance, et
- un canal conventionnel.

La sélection entre ces modes de réalisation dépend des avantages dont on veut tirer bénéfice.

Toutes les considérations qui vont suivre sont énoncées dans le cas de la génération principale, c'est-à-dire entraînée par les réacteurs, mais elles sont également valables pour la génération auxiliaire entraînée par un groupe de puissance auxiliaire (APU) de type turbomachine ou pile à combustible ou pour la génération secours de type éolienne, batterie ou pile à combustible.

### 1. Architecture du canal de puissance

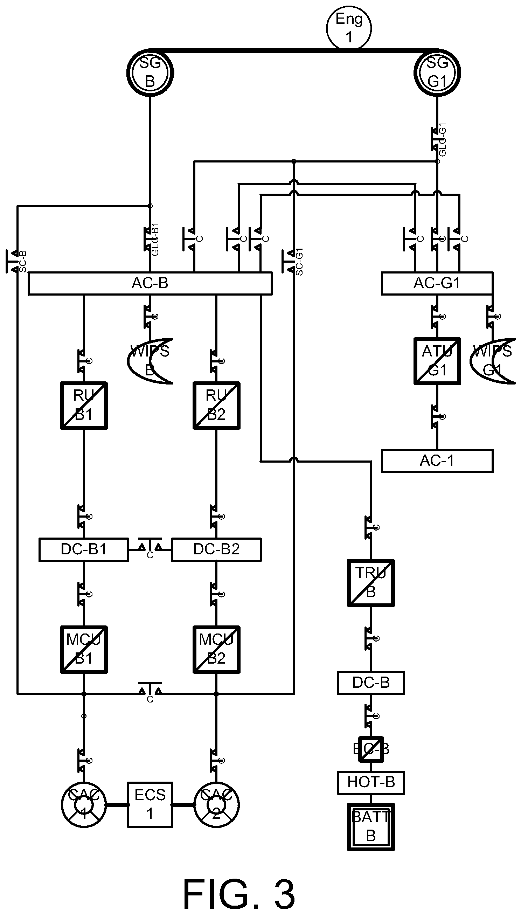

Comme illustré sur la figure 3, dans un canal de puissance, pour des raisons de coûts de maintenance, et afin de limiter le nombre de générateurs électriques, un seul générateur-démarreur SG-B alimente, via la barre principale d'alimentation en courant alternatif AC-B, l'ensemble des charges de puissance symbolisées par un système de protection de la voilure contre le givre WIPS-B et deux chaînes d'alimentation avec redresseurs RU-B1 et RU-B2 et deux onduleurs MCU-B1 et MCU-B2 pour les moteurs-compresseurs CAC1 et CAC2 du système de conditionnement d'air ECS1.

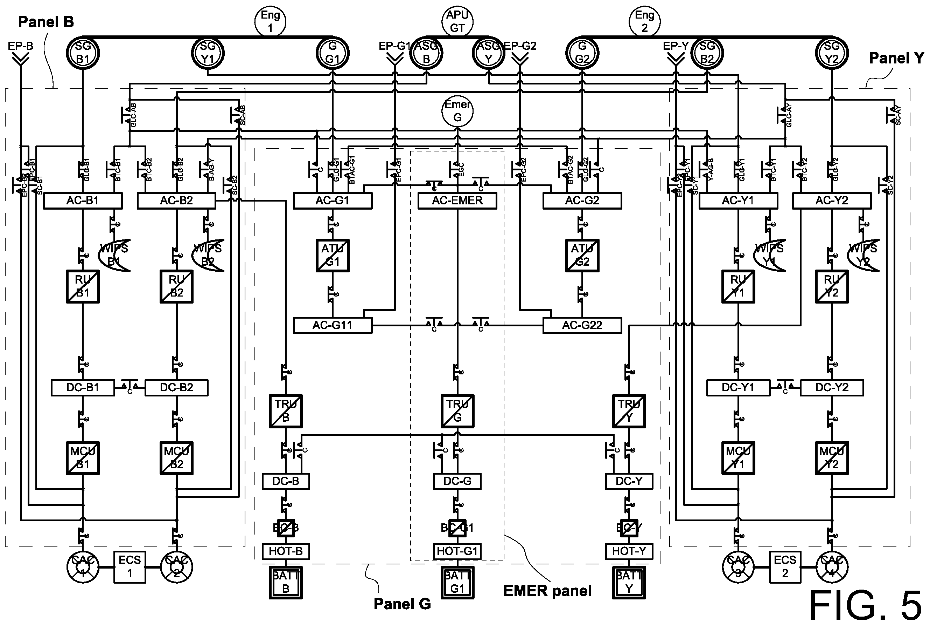

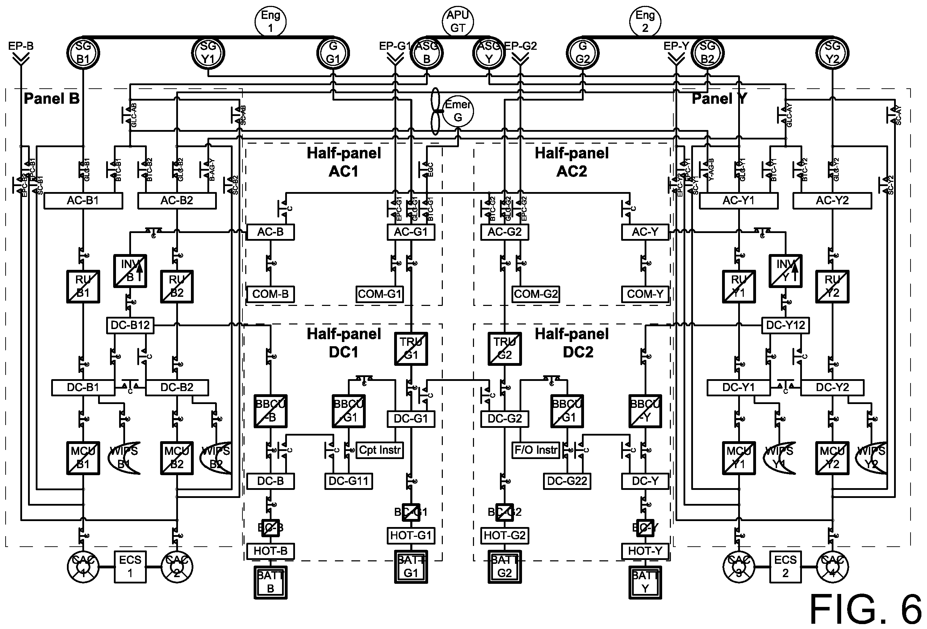

Dans un autre mode de réalisation comme illustré sur les figures 5 et 6, afin d'éviter une sous-utilisation des générateurs des canaux conventionnels dans le cas où ceux-ci ont un dimensionnement identique aux générateurs des canaux de puissance, on utilise deux générateurs pour alimenter deux canaux de puissance distincts. Une telle division de la génération en plusieurs sous-systèmes de génération permet de réduire le diamètre de chacun des générateurs. Ceci a pour conséquence :
- de permettre de réduire le diamètre global de la nacelle et donc de diminuer la traînée aérodynamique,
- d'augmenter le nombre de sources électriques et de permettre une meilleure redondance et une ségrégation plus importante des circuits électriques,
- d'augmenter la fiabilité et la sécurité de l'alimentation électrique des systèmes utilisateurs ainsi que la disponibilité et la fiabilité opérationnelle de l'avion,
- de faciliter le couplage de cette architecture de génération électrique avec une architecture de commande de vol avec actionneurs électriques du fait de l'augmentation du nombre de sources électriques.

### 2. Génération pour le canal de puissance

Afin de conserver une possibilité d'interconnexion avec un canal conventionnel, chaque canal de puissance est un système alternatif triphasé, avec ou sans neutre distribué, en 115 volts ou 230 volts pour éviter une masse de câblage trop élevée selon les besoins de puissance des utilisateurs, avec une fréquence constante égale à 400 Hz ou une fréquence variable entre 360 et 800 Hz.

Afin de réduire la masse des générateurs-démarreurs pour une même puissance donnée, une augmentation de la fréquence électrique peut être réalisée :
- en augmentant la vitesse de rotation, ou
- en augmentant le nombre de paires de pôles, ou
- en combinant ces deux solutions.

La fréquence peut ainsi varier entre 800 et 2000 Hz, ce qui correspond à la fréquence d'un générateur-démarreur de huit pôles tournant entre 12000 et 30000 tr/mn. Une telle augmentation de la fréquence permet de réduire le nombre et donc le poids des éléments de filtrage des convertisseurs statiques électroniques de chaque canal de puissance.

Une relaxation des contraintes de qualité de la tension des canaux de puissance est possible : elle permet d'augmenter la puissance massique des générateurs-démarreurs en se focalisant sur une conception géométrique et massique de ceux-ci sans tenir compte des contraintes des paramètres électriques internes.

Afin d'augmenter sa puissance massique et volumique et afin d'optimiser sa structure de redressement, chaque générateur pour un canal de puissance est réalisé avantageusement par une machine polyphasée dont le nombre de phases est supérieur ou égal à trois, préférablement égal à cinq ou à six.

### 3. Convertisseurs pour le canal de puissance

La fonction conversion-redressement de la tension primaire 230 volts alternatif triphasé en +/-270 volts continu, nécessaire dans un variateur de vitesse électrique, est avantageusement réalisée par un pont redresseur triphasé à six diodes léger et simple dans le cas des architectures « 2P2C » et « 4P2C » alors qu'un auto-transformateur redresseur à dix-huit diodes et inductances d'interphase lourd et complexe est nécessaire dans une architecture « 4M », pour satisfaire les normes de qualité réseau conventionnelles.

Dans le cas d'une génération polyphasée avec un nombre de phases supérieures à trois, comme envisagé ci-dessus, un redresseur polyphasé sans auto-transformateur réduit l'ondulation de sa tension de sortie et rejette moins d'harmoniques en amont sur le réseau.

Si, comme envisagé ci-dessus, on réalise une relaxation de la qualité de la tension dans les canaux de puissance, les filtres des convertisseurs statiques électroniques de puissance, onduleurs ou hacheurs, connectés dans les canaux de puissance peuvent être réduits au minimum. Cette réduction des filtres, qui est indépendante de la réduction des éléments de filtrage envisagée ci-dessus, peut se cumuler à celle-ci.

### 4) Canal conventionnel

Avantageusement tous les générateurs alimentant les canaux de puissance ou alimentant les canaux conventionnels, peuvent être identiques pour des raisons de coûts de maintenance, afin de conserver l'interchangeabilité entre eux. Ces générateurs peuvent alors être des générateurs synchrones triphasés sans balai à trois étages, nommés VFG (« Variable Frequency Generator ») ou de tels générateurs rendues réversibles pour assurer la fonction démarrage électrique des réacteurs, nommés VFSG (« Variable Frequency Starter Generator »). Un générateur délivrant du 115 volts alternatif triphasé à fréquence constante égale à 400 Hz ou à fréquence variable entre 360 et 800 Hz permet de supprimer la fonction conversion 230 volts alternatif / 115 volts alternatif typiquement réalisée par un auto-transformateur dédié.

Mais on peut également utiliser deux types de générateurs différents pour les canaux de puissance et les canaux conventionnels de façon à assurer une dissimilarité technologique des sources de puissance électrique principale et maintenir ainsi une meilleure sécurité de l'alimentation des charges critiques.

On va, à présent, décrire trois exemples de réalisations du système de l'invention nommés « 2P2C », « 4P2C » et « 4P*2C » dans lesquels une sélection des différents modes de réalisation ci-dessus est réalisée. Ces exemples de réalisation sont décrits dans un ordre de complexité croissante, c'est-à-dire dans un ordre d'introduction de modifications de plus en plus complexes.

### A. Premier exemple de réalisation : l'architecture 2P2C

Cette architecture « 2P2C » est constituée, dans le cas d'un avion bimoteur, de :
- deux canaux de distribution électrique pour charges de forte puissance notés « P »,
- deux canaux de distribution électrique pour charges conventionnelles notés « C ».

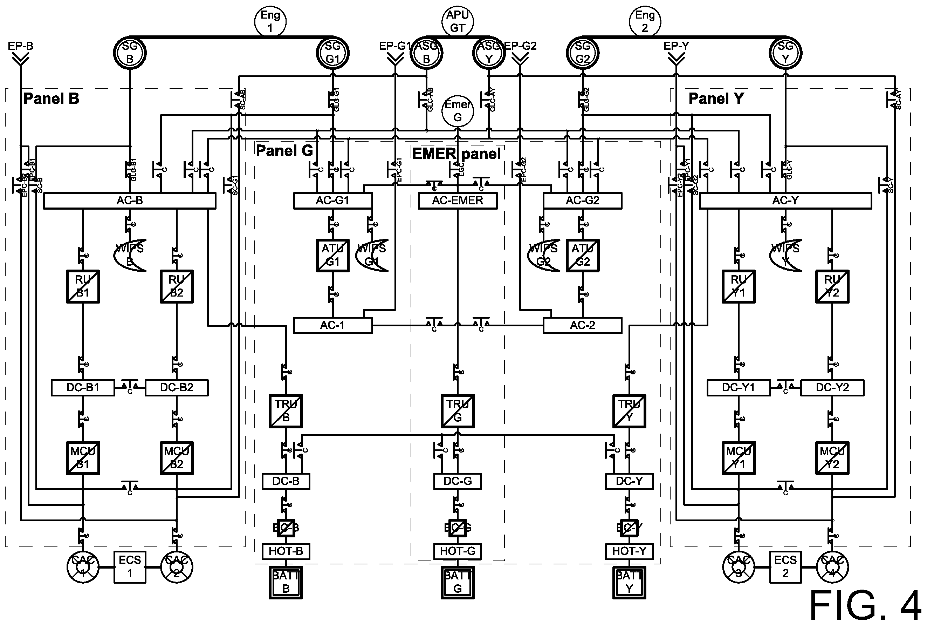

Sur la figure 4 sont ainsi représentés quatre générateurs-démarreurs identiques SG-B, SG-G1, SG-G2 et SG-Y, quatre redresseurs simples RU-B1, RU-B2, RU-Y1 et RU-Y2, quatre onduleurs MCU-B1, MCU-B2, MCU-Y1 et MCU-Y2 à filtrage réduit deux auto-transformateurs ATU-G1 et ATU-G2 et trois transformateurs-redresseurs TRU-B, TRU-Y et TRU-G.

Conformément à la figure 3, la puissance électrique extraite d'un réacteur d'avion Eng1 ou Eng2 est distribuée suivant les canaux « P » et les canaux « C ».

Un canal de distribution électrique « P » B (ou Y) comprend notamment:
- un générateur-démarreur électrique SG-B (SG-Y),
- une barre de distribution primaire préférablement en 230 volts alternatif AC-B (AC-Y), qui distribue directement la puissance du générateur-démarreur SG-B (SG-Y) à une charge triphasée équilibrée WIPS-B (WIPS-Y),
- deux ponts redresseurs simples à six diodes avec un filtrage réduit RU-B1 et RU-B2 (RU-Y1 et RU-Y2),
- deux barres de distribution préférablement en +/-270 volts continu DC-B1 etDC-B2 (DC-Y1 et DC-Y2),
- deux onduleurs à filtrage réduit MCU-B1 et MCU-B2 (MCU-Y1 et MCU-Y2) pilotant en vitesse et couple des moteurs de forte puissance ou des générateurs-démarreurs en mode démarreur,
   - deux moteurs-compresseurs CAC-1 et CAC-2 (CAC-3 et CAC-4) pour le système de conditionnement d'air ECS 1 (ECS-2),
   - un transformateur-redresseur TRU-B (TRU-Y),
   - une barre de distribution DC-B (DC-Y),
   - un chargeur de batterie BC-B (BC-Y),
   - une batterie BATT-B (BATT-Y).

Un canal de distribution électrique « C » G1 (ou G2) comprend notamment :
- un générateur-démarreur électrique SG-G1 (SG-G2),
- une barre de distribution primaire préférablement en 230 volts alternatif AC-G1 (AC-G2) qui distribue directement la puissance du générateur-démarreur SG-G1 (SG-G2) à une charge triphasée équilibrée WIPS-G1 (WIPS-G2),
- un convertisseur 230 volts alternatif/115 volts alternatif ATU-G1 (ATU-G2), si nécessaire,
- une barre de distribution en 115 volts alternatif AC-1 (AC-2).

Comme illustré sur la figure 4 le système de l'invention associé à cette architecture comprend avantageusement :
- un coeur (ou armoire électique) « bleu » ou « Panel B », regroupant des demi-canaux de puissance B1 et B2,
- un coeur « jaune » ou « Panel Y », regroupant des demi-canaux de puissance Y1 et Y2,
- un coeur « vert » ou « Panel G », regroupant des canaux conventionnels G1 et G2 en 230 volts et 115 volts alternatif, et les réseaux 28 volts continus DC-B et DC-Y, et
- un coeur de secours ou « EMER Panel », comprenant le canal conventionnel secours.

On retrouve dans chacun de ces circuits des éléments analogues à ceux illustrés sur la figure 3, et qui ont été décrits précédemment.

Sur l'ensemble des figures, les états des contacteurs référencés par exemple C, GLC, EPC, EGC, BTC, SIC, et SC, ouverts ou fermés correspondent à une configuration en vol en conditions normales.

Dans l'architecture illustré sur la figure 3, lorsque, en vol ou au sol, les réacteurs Eng1 et Eng2 sont démarrés et en configuration normale (aucune panne d'équipement), le réacteur Eng-1 entraîne mécaniquement le générateur-démarreur électrique SG-B. Ce générateur SG-B alimente les charges électriques du canal « de puissance » connectées aux barres de distribution AC-B, DC-B1 et DC-B2.

Le réacteur d'avion Eng-1 entraîne aussi mécaniquement le générateur-démarreur électrique SG-G1. Ce générateur SG-G1 alimente les charges électriques du canal « conventionnel » connectées aux barres de distribution AC-G1.

Les générateurs-démarreurs électriques SG-B et SG-G1 sont des équipements identiques afin de conserver une interchangeabilité de permettre des reconfigurations du réseau et de reprendre des barres de distribution en conditions anormales. Par contre, leurs connexions au réseau électrique et leurs fonctions respectives dans l'architecture « 2P2C » diffèrent.

De tels générateurs-démarreurs peuvent être des machines synchrones triphasées sans balai, à trois étages et réversibles, utilisables en mode générateur ou en mode démarreur. Etant donnée l'augmentation des besoins de puissance pour les avions futurs, on choisit la tension simple de sortie de ces générateurs-démarreurs ayant une valeur efficace de 230 Volts au lieu de 115 Volts couramment utilisé en aéronautique, la fréquence du réseau étant variable entre 360 et 800 Hz et proportionnelle au régime de l'arbre haute pression (HP) du moteur Eng-1.

Un canal de distribution électrique « C » alimente des charges alternatives requérant une bonne qualité de tension électrique. Ainsi les charges techniques et commerciales sont connectées aux barres de distribution AC-G1.

Des charges non polluantes du point de vue de la réjection harmonique et tolérant une faible qualité de tension, telles qu'un système de résistances chauffantes pour assurer la protection de la voilure contre le givre WIPS-B ou WIPS-G1, peuvent être indifféremment alimentées par les canaux « conventionnel » ou « de puissance », un tel choix d'alimentation étant effectué de manière à équilibrer le dimensionnement des générateurs SG-B et SG-G1.

Les charges de faible tension continue telle que l'avionique, comme illustré sur la figure 4, sont connectées aux barres DC-B, DC-G et DC-Y et peuvent être alimentées selon la configuration du réseau par les transformateurs-redresseurs TRU-B, TRU-G et TRU-Y ou les batteries BATT-B, BATT-G et BATT-Y par l'intermédiaire des chargeurs de batterie BC-B, BC-G et BC-Y.

Le canal de puissance associé, en mode normal, au générateur-démarreur SG-B alimente des redresseurs triphasés à six diodes RU-B1 et RU-B2 qui assurent la conversion de la tension alternative triphasée de la barre AC-B en une tension continue redressée distribuée grâce aux barres de distribution DC-B1 et DC-B2. Comme expliqué ci-dessus, un léger redresseur à six diodes RU-B1 est suffisant par rapport au lourd auto-transformateur-redresseur à dix-huit diodes ATRU-B1 illustré sur les figures 1 et 2, même si ce redresseur à six diodes rejette beaucoup d'harmoniques car les charges du canal dit « de puissance » acceptent une qualité de tension dégradée par rapport aux normes actuelles.

Les barres de distribution DC-B1 et DC-B2 alimentent des onduleurs triphasés MCU-B1 et MCU-B2 qui alimentent les moteurs-compresseurs CAC1 et CAC2 du système de conditionnement d'air ECS1 et régulent leurs vitesse, couple et puissance en modifiant les actions de courant et de tension selon les besoins du système de conditionnement d'air ECS1 de l'avion.

La séparation des charges générant de la pollution harmonique et des charges requérant une bonne qualité de tension suivant des canaux de distribution distincts permet de réduire fortement les éléments de filtrage associés aux onduleurs MCU-B1 et MCU-B2 et ainsi de diminuer la masse de tels équipements.

Dans l'exemple de réalisation illustré sur la figure 4, lorsque l'avion est au sol, les générateurs-démarreurs SG-B et SG-G1 sont utilisés en mode démarreur pour entraîner mécaniquement le réacteur Eng-1 pendant la séquence de démarrage. Ensuite le réacteur Eng-2 est démarré à partir des générateurs-démarreurs SG-G2 et SG-Y. Les sources de puissance pour le démarrage électrique des réacteurs peuvent être le groupe de puissance auxiliaire APU-GT, un ou plusieurs groupes de parc EP-B, EP-G1, EP-G2, EP-Y ou l'autre réacteur Eng-1 ou Eng-2 s'il est déjà démarré.

Les onduleurs MCU-B1 et MCU-B2, en plus de leur fonction pilotage des moteurs-compresseurs CAC1 et CAC2, peuvent également servir à alimenter et piloter les générateurs-démarreurs SG-B et SG-G1 en mode démarrage du réacteur Eng-1. Lors d'un démarrage alimenté au sol par les prises de parc EP-B et EP-G1, un des onduleurs, par exemple MCU-B1, peut également être utilisé en mode redresseur triphasé pour convertir le 115 volts alternatif délivré par le groupe de parc connecté à la prise EP-B en une tension continue pour les barres de distribution DC-B1 et DC-B2. L'autre onduleur MCU-B2 assure l'alimentation et le contrôle du générateur-démarreur SG-G1.

### B. Second exemple de réalisation : l'architecture 4P2C

L'architecture « 4P2C » est constituée, dans le cas d'un avion bimoteur, de :
- quatre canaux de distribution électrique pour charges de forte puissance notés « P »,
- deux canaux de distribution électrique pour charges conventionnelles notés « C ».

Comme illustré sur la figure 5, cet exemple de réalisation comprend quatre générateurs-démarreurs de puissance identiques SG-B1, SG-Y1, SG-B2 et SG-Y2 et deux générateurs conventionnels G-G1 et G-G2. Il comprend, comme déjà illustré sur la figure 4 : quatre redresseurs simples RU-B1, RU-B2, RU-Y1, RU-Y2, quatre onduleurs à filtrage réduit MCU-B1, MCU-B2, MCU-Y1, MCU-Y2 et deux autotransformateurs ATU-G1 et ATU-G2.

Les avantages listés pour l'architecture « 2P2C » sont valables pour l'architecture « 4P2C ».

Dans un tel exemple chaque canal « P » très fortement chargé est divisé en deux canaux « B1 » et « B2 » (ou « Y1 » et « Y2 »). Une telle division permet, par rapport à l'architecture « 2P2C », d'obtenir un meilleur dimensionnement des générateurs-démarreurs de puissance et une réduction de la masse au niveau avion.

Pour conserver l'interchangeabilité des générateurs-démarreurs et diminuer les coûts de maintenance et de stockage des pièces de rechange, les six générateurs-démarreurs SG-B1, SG-Y1, G-G1, G-G2, SG-B2, SG-Y2 (six au niveau avion, soit trois par moteur Eng1 et Eng2 pour un biréacteur), qui alimentent chacun une barre bus de distribution AC-B1, AC-Y1, AC-G1, AC-G2, AC-B2, AC-Y2 sont des machines identiques bien que leurs fonctions ou distributions associées soient bien différentes. On trouve ainsi six générateurs-démarreurs identiques (même si la fonction démarreur n'est pas utilisée pour les deux générateurs associés aux canaux conventionnels) et deux auto-transformateurs ATU-G1 et ATU-G2.

L'architecture « 4P2C » augmente la fiabilité et la sécurité de l'alimentation électrique et la disponibilité et la fiabilité opérationnelle de l'avion grâce à un nombre plus élevé de sources de puissance électrique. De plus, elle assure une meilleure ségrégation des canaux de distribution et une meilleure redondance du système d'alimentation électrique.

Ainsi, l'intégration d'une architecture de commandes de vol « plus électrique » ou « tout électrique », couplée à une telle architecture de puissance « 4P2C », est facilitée.

Comme illustré sur la figure 5, une architecture de commande de vol dite « 3H » basée sur trois circuits hydrauliques référencés par trois couleurs différentes, bleu, vert et jaune, est reprise pour référencer les six canaux électriques présents dans le cas de l'architecture « 4P2C » implantée sur un avion bimoteur. Sur la partie gauche de la figure 5, le premier canal est noté « B1 » et le second canal est noté « B2 », ces canaux « bleus » étant reconfigurables entre eux. Les deux canaux verts centraux sont notés « G1 » et « G2 ». A droite, les deux canaux jaunes sont notés « Y1 » et « Y2 ».

Comme illustré sur la figure 5, les coeurs électriques associés à cette architecture « 4P2C » forment :
- un « coeur bleu » ou « Panel B », regroupant les canaux de puissance B1 et B2,
- un « coeur jaune » ou « Panel Y », regroupant les canaux de puissance Y1 et Y2,
- un « coeur vert » ou « Panel G », regroupant les canaux conventionnels G1 et G2 en 230 volts et 115 volts alternatif, et regroupant les réseaux 28 volts continus DC-B et DC-Y,
- un « coeur de secours » ou « EMER Panel » comprenant le canal conventionnel secours.

Le fonctionnement de l'architecture « 4P2C » est très proche de celui de l'architecture « 2P2C ». Les légères différences se comprennent aisément en analysant comparativement les figures 4 et 5.

Cependant, un avantage particulier de l'architecture « 4P2C » est d'intégrer un croisement particulier entre générateurs-démarreurs et coeurs correspondants en des positions différentes dans le fuselage de l'avion, par exemple les côtés gauche et droit (nommés « Panel B » et « Panel Y » ou « côté 1 » et « côté 2 ») afin d'éviter des reconfigurations et des transferts entre barres de distribution trop importants en cas d'arrêt d'un réacteur. Le générateur-démarreur SG-Y1 entraîné par le réacteur Eng1 alimente le coeur électrique « Panel Y ». Le générateur-démarreur SG-B2 entraîné par le réacteur Eng2 alimente le coeur électrique « Panel B ». Ainsi, en cas d'arrêt du moteur Eng2 par exemple, on peut avoir la configuration suivante sans aucun transfert entre coeurs électriques :
- Le coeur électrique « Panel B » est toujours alimenté par le générateur-démarreur SG-B1.
- Le coeur électrique « Panel G » est toujours alimenté par le générateur G-G1.
- Le coeur électrique « Panel Y » est toujours alimenté par le générateur-démarreur SG-Y1.

### C. Troisième exemple de réalisation : l'architecture 4P*2C

L'architecture « 4P*2C » est constituée, dans le cas d'un avion bimoteur, de :
- quatre canaux de distribution électrique optimisés pour charges de forte puissance, notés « P* », c'est-à-dire intégrant des modifications complexes,
- deux canaux de distribution électrique pour charges conventionnelles, notés « C ».

Les avantages listés pour l'architecture « 4P2C » sont valables pour l'architecture « 4P*2C » à l'exception du point sur l'interchangeabilité totale entre les six générateurs-démarreurs, avantage non présent pour l'architecture « 4P*2C » mais compensé par la suppression du convertisseur 230 volts alternatif/115 volts alternatif.

Comme illustré sur la figure 6, cette architecture 4P*2C comporte quatre générateurs-démarreurs de puissance SG-B1, SG-Y1, SG-B2, SG-Y2 et deux générateurs-conventionnels G-G1 et G-G2 mais aucun auto-transformateur. Elle introduit une dissimilarité technologique entre un générateur-démarreur de puissance et un générateur conventionnel, dissimilarité dont le bénéfice se mesure dans l'analyse de sécurité.

Les contraintes de dimensionnement du générateur-démarreur de puissance vis-à-vis de la qualité de la tension du réseau sont relâchées et permettent une réduction de la masse de celui-ci.

De plus, par rapport à l'architecture « 4P2C », on utilise une vitesse de rotation très élevée et/ou un nombre de pôles optimisé du générateur-démarreur de puissance. Ceci permet :
- une réduction de sa masse et de son diamètre,
- une fréquence électrique comprise dans une gamme plus haute, ce qui permet de réduire encore plus la masse des filtres des redresseurs et des onduleurs par rapport à l'architecture « 4P2C ».

La réduction de la masse des générateurs-démarreurs principaux entraînés par les réacteurs, permise grâce à l'augmentation de la vitesse de rotation du rotor et/ou à la relaxation des contraintes de qualité de la puissance électrique du réseau, est aussi applicable aux générateurs-démarreurs auxiliaires entraînés par le groupe de puissance auxiliaire (APU).

Les quatre générateurs-démarreurs principaux SG-B1, SG-Y1, SG-B2, SG-Y2 dédiés aux canaux de puissance optimisés « P* » sont des machines électriques conçues spécifiquement pour alimenter les canaux de puissance et s'affranchissent totalement des contraintes de conception des générateurs aéronautiques actuels.

Afin de réduire la masse des générateurs-démarreurs pour une même puissance donnée, la vitesse de rotation et le nombre de paires de pôles peuvent être augmentés sans chercher à conserver une fréquence variable entre 360 et 800 Hz, par exemple entre 800 et 2000 Hz, ce qui correspond à la fréquence d'un générateur-démarreur de huit pôles tournant entre 12000 et 30000 tr/mn.

De plus, la relaxation des contraintes de qualité de la tension des canaux « P* » permet d'augmenter la puissance massique des générateurs-démarreurs en se focalisant sur une conception géométrique et massique sans tenir compte des contraintes des paramètres électriques internes.

L'étage principal des générateurs-démarreurs SG-B1, SG-Y1, SG-B2, SG-Y2 des canaux « P* » est avantageusement un alternateur synchrone polyphasé : triphasé, pentaphasé, hexaphasé ou à deux systèmes triphasés déphasés de 30° afin d'alimenter en parallèle deux simples ponts redresseurs triphasés à six diodes chacun. Ces machines, que l'on peut qualifier de polyphasés, permettent pour assurer un minimum de qualité de tension réseau, d'éviter le recours à un auto-transformateur déphaseur dans la fonction redressement du 230 volts alternatif en +/-270 volts continu.

Les deux générateurs G-G1 et G-G2 des canaux conventionnels « C » sont des machines synchrones triphasées sans balai à trois étages et délivrent préférablement une tension de 115 volts alternatif au point de régulation, ce qui permet de supprimer le convertisseur 230 volts alternatif/115 volts alternatif nécessaire dans les architectures « 2P2C » et « 4P2C ».

L'architecture « 4P*2C » permet de réduire le nombre et la masse des éléments de filtrage associés aux convertisseurs électroniques de puissance, c'est-à-dire les redresseurs et les onduleurs pour les charges de forte puissance. Ainsi la fonction conversion de la tension primaires du réseau 230 volts alternatif triphasé en bus +/-270 volts continu nécessaire dans un variateur de vitesse électrique peut être réalisée par un pont redresseur polyphasé à six diodes, ou plus, léger et simple.

Par ailleurs, l'utilisation d'une gamme de fréquence variable plus élevée pour les canaux « P* », par exemple de 800 à 2000 Hz, permet de réduire encore la masse des éléments de filtrage associés à ces canaux.

Comme illustré sur la figure 6, les coeurs électriques associés à cette architecture « 4P*2C » comprennent :
- un coeur « Panel B », regroupant les canaux de puissance B1 et B2, une barre de distribution continu DC-B12, et un onduleur triphasé INV-B,
- un coeur « Panel Y », regroupant les canaux de puissance Y1 et Y2, une barre de distribution continu DC-Y12 et un onduleur triphasé INV-Y,
- un premier demi-coeur (« Half-panel ») AC1, regroupant les barres de distribution techniques en 115 volts alternatif AC-B et AC-G1 et les barres de distribution commerciales COM-B et COM-G1,
- un second demi-coeur (« Half-panel ») AC2, regroupant les barres techniques en 115 volts alternatif AC-G2 et AC-Y et les barres de distribution commerciales COM-G2 et COM-Y,
- un troisième demi-coeur (« Half-panel ») DC1, regroupant les barres de distribution DC-B, DC-G11 et DC-G1, les convertisseurs de puissance BBCU-B, BBCU-G1, un transformateur-redresseur TRU-G1, pouvant être reliés aux instruments du commandant de bord (« Cpt Instr »),
- un quatrième demi-coeur (« Half-panel ») DC2, regroupant les barres de distribution DC-G2, DC-Y et DC-G22, les convertisseurs de puissance BBCU-G1, BBCU-Y, un transformateur-redresseur TRU-G2, pouvant être reliés aux instruments de copilote (« F/O Instr »).

Par rapport au découpage des coeurs électriques proposé dans le second exemple de réalisation « 4P2C », ce troisième exemple réalisation « 4P*2C » est basé sur des coeurs identiques deux-à-deux et permet d'éviter un coeur conventionnel de secours « EMER Panel » de constitution différente du coeur conventionnel principal Panel G.

Sur la figure 6, lorsque, en vol ou au sol, les moteurs sont démarrés et en configuration normale (aucune panne d'équipement), le réacteur d'avion Eng-1 entraîne mécaniquement les générateurs-démarreurs électriques SG-B1 et SG-Y1. Le générateur-démarreur SG-B1 alimente les charges électriques du canal « de puissance » B1 connectées aux barres de distribution AC-B1 et DC-B1 interne au coeur électrique « Panel B ». Le générateur-démarreur SG-Y1 est connecté au coeur électrique « Panel Y ».

Le générateur-démarreur SG-B2 alimente les charges électriques du canal B2 dit « de puissance » connectées respectivement aux barres de distribution AC-B2 et DC-B2.

Les générateurs-démarreurs SG-B1 et SG-B2 sont des équipements identiques pour permettre des reconfigurations du réseau interne aux canaux B1 et B2 et reprendre des barres de distribution en conditions anormales.

Un générateur-démarreur « de puissance » est alors une machine synchrone polyphasée sans balai, à trois étages et réversible, utilisable en mode générateur ou en mode démarreur. Etant donnée l'augmentation des besoins de puissance pour les avions futurs, la tension simple de sortie de ces générateurs-démarreurs a, de préférence, une valeur efficace de 230 Volts au lieu de 115 Volts couramment utilisé en aéronautique. La fréquence des canaux de puissance est variable entre 800 et 2000 Hz et proportionnelle au régime de l'arbre haute pression du moteur Eng-1.

Le réacteur Eng-1 entraîne aussi mécaniquement le générateur électrique G-G1. Le stator triphasé de l'étage principal du générateur G-G1 alimente en 115 volts alternatif triphasé les charges électriques du canal « conventionnel » connectées aux barres de distribution AC-G1. Le canal « conventionnel » alimente les charges alternatives requérant une bonne qualité de tension électrique. Ainsi les charges techniques et commerciales sont connectées aux barres de distribution AC-G1.

Des charges non polluantes du point de vue de la réjection harmonique et tolérant une faible qualité de tension, telles qu'un système de résistances chauffantes pour assurer la protection de la voilure contre le givre WIPS-B1 ou WIPS-B2, peuvent être indifféremment alimentées par les barres de distribution AC-B1, AC-B2 ou DC-B1, DC-B2. Le choix d'une telle alimentation est effectué de manière à équilibrer le dimensionnement des générateurs SG-B1 et SG-G1 et des redresseurs RU-B1 et RU-B2.

Les charges de faible tension 28 volts continu, telle que l'avionique, sont connectées aux barres de distribution DC-G1 et peuvent être alimentées selon la configuration du réseau par le transformateur-redresseur TRU-G1 ou la batterie BATT-G1 par l'intermédiaire du chargeur de batterie BC-G1. La technologie et le dimensionnement de cette batterie 28 volts continu dite « batterie d'énergie » sont choisis afin d'assurer la fourniture d'énergie en mode dernier secours.

Le canal de puissance B1 associé en mode normal au générateur-démarreur SG-B1 alimente un redresseur hexaphasé à douze diodes RU-B1 qui assure la conversion de la tension alternative hexaphasée de la barre de distribution AC-B1 en une tension continue redressée distribuée grâce aux barres de distribution DC-B1 et DC-B. Comme expliqué ci-dessus, un léger redresseur à douze diodes RU-B1 est suffisant même s'il rejette plus d'harmoniques que l'auto-transformateur ATRU, car les charges du canal « de puissance » acceptent une qualité de tension moindre par rapport aux normes actuelles.

Les barres de distribution DC-B1 et DC-B2 alimentent des onduleurs hexaphasés MCU-B1 et MCU-B2 qui alimentent les moteurs-compresseurs CAC1 et CAC2 du système de conditionnement d'air ECS1 et régulent leurs vitesse, couple et puissance en modifiant les actions de courant et de tension selon les besoins du système de conditionnement d'air de l'avion.

La barre de distribution DC-B, et son symétrique la barre de distribution DC-Y, alimentent des actionneurs électriques de commande de vol non représentés. L'onduleur triphasé INV-B assure la conversion de la haute tension +/-270 volts continu de la barre de distribution DC-B en 115 volts alternatif triphasé à fréquence constante de 400 Hz pour alimenter des charges techniques sur la barre de distribution AC-B ou des charges commerciales sur la barre de distribution COM-B.

Les convertisseurs électroniques de puissance de type hacheur réversible BBCU-B et BBCU-G1 permettent l'alimentation en moyenne tension continu, via les barres de distribution DC-B et DC-G1, d'actionneurs de puissance intermittents tel que le système de freinage électrique. Lorsque l'alimentation normale par la barre de distribution DC-B12 est indisponible, ces actionneurs peuvent être alimentés par la batterie BATT-B. La technologie et le dimensionnement de cette batterie dite « batterie de puissance » sont choisis afin d'assurer l'alimentation de fortes mais brèves pointes de demande de puissance intermittente. Dans le cas de la perte de l'alimentation normale par la barre de distribution DC-B12, le convertisseur BBCU-G1 et la barre DC-G1 permettent de recharger la batterie BATT-B.

De même que pour les redresseurs à douze diodes utilisés en lieu et place de l'auto-transformateur-redresseur à dix-huit diodes, la séparation, suivant des canaux de distribution distincts, des charges générant de la pollution harmonique et des charges requérant une bonne qualité de tension permet de réduire fortement les éléments de filtrage associés aux onduleurs MCU-B1 et MCU-B2 et ainsi de diminuer la masse de ces équipements.

Sur la figure 6, lorsque l'avion est au sol, les générateurs-démarreurs SG-B1 et SG-Y1 sont utilisés en mode démarreur pour entraîner mécaniquement le réacteur Eng-1 pendant la séquence de démarrage. Ensuite le réacteur Eng-2 est démarré à partir des générateurs-démarreurs SG-B2 et SG-Y2. Les sources de puissance pour le démarrage électrique des réacteurs peuvent être le groupe de puissance auxiliaire APU-GT, un ou plusieurs groupes de parc EP-B, EP-Y ou l'autre réacteur Eng-1 ou Eng-2 s'il est déjà démarré.

Les onduleurs MCU-B1 et MCU-B2, en plus de leur fonction pilotage des moteurs-compresseurs CAC, peuvent également servir à alimenter et piloter les générateurs-démarreurs SG-B1 et SG-Y1 en mode démarrage du réacteur Eng-1. Lors d'un démarrage alimenté au sol par les prises de parc EP-B et EP-Y, certains onduleurs, par exemple MCU-B2 et MCU-Y2, peuvent également être utilisé en mode redresseur triphasé pour convertir le 115 volts alternatif délivré par les groupes de parc connectés aux prises EP-B et EP-Y en une tension continue pour les barres de distribution DC-B1/DC-B2 et DC-Y1/DC-Y2. Les autres onduleurs MCU-B1 et MCU-Y1 assurent l'alimentation et le contrôle des générateurs-démarreurs SG-B1 et SG-Y1.

## Revendications

1. Système de génération, conversion, distribution et démarrage électrique à bord d'un aéronef de type « bleedless », c'est-à-dire à architecture électrique de puissance sans réseau pneumatique, **caractérisé en ce qu'**il comprend :
- au moins deux premiers canaux (B, Y) de distribution électrique pour charges de forte puissance spécifiques aux aéronefs de type « bleedless », les charges générant de la pollution harmonique ; et
- au moins deux seconds canaux (G1, G2) de distribution électrique pour les autres charges comprenant des charges techniques requérant une bonne qualité de tension telles que l'avionique, l'éclairage, les pompes carburants et les charges commerciales comme les offices et les systèmes de divertissement des passagers, dans lequel les premiers et seconds canaux sont séparés et sont alimentés par des générateurs distincts (SG-B, SG-Y ; SG-G1, SG-G2) entraînés par les réacteurs (Eng1, Eng2) de l'aéronef en conditions normales de vol.

2. Système selon la revendication 1, dans lequel la fréquence des canaux de puissance est comprise entre 800 Hz et 2 KHz et dans lequel la fréquence des seconds canaux est comprise entre 360 Hz et 800 Hz.

3. Système selon la revendication 1, dans lequel chaque générateur (SG-B, SG-Y) pour un premier canal est une machine polyphasée dont le nombre de phases est supérieur ou égal à trois.

4. Système selon la revendication 1, comprenant :
- deux premiers canaux de distribution électrique (B, Y) pour charges de forte puissance,
- deux seconds canaux de distribution électrique (G1, G2) pour les autres charges.

5. Système selon la revendication 4, dans lequel chaque premier canal de distribution électrique comprend :
- un générateur-démarreur électrique (SG-B ; SG-Y),
- une barre de distribution en courant alternatif (AC-B ; AC-Y),
- deux ponts redresseurs simples à six diodes avec un filtrage réduit (RU-B1, RU-B2 ; RU-Y1, RU-Y2),
- deux barres de distribution en courant continu (DC-B1, DC-B2 ; DC-Y1, DC-Y2),
- deux onduleurs à filtrage réduit (MCU-B1, MCU-B2 ; MCU-Y1, MCU-Y2),
- un transformateur-redresseur (TRU-B, TRU-Y),
- une barre de distribution (DC-B ; DC-Y),
- une batterie (BATT-B, BATT-Y).

6. Système selon la revendication 4, dans lequel chaque second canal de distribution électrique comprend :
- un générateur-démarreur électrique (SG-G1, SG-G2),
- une barre de distribution de courant alternatif (AC-G1 ; AC-G2),
- un convertisseur (ATU-G1 ; ATU-G2),
- une barre de distribution de courant alternatif (AC-1 ; AC-2).

7. Système selon la revendication 4 comprenant :
- un premier coeur regroupant deux premiers canaux de puissance (B1 et B2),
- un second coeur regroupant deux seconds canaux de puissance (Y1 et Y2),
- un troisième coeur regroupant des seconds canaux (G1 et G2) en 230 volts et 115 volts alternatif, et des réseaux 28 volts continus (DC-B et DC-Y), et
- un coeur de secours.

8. Système selon la revendication 1, comprenant :
- quatre premiers canaux de distribution électrique (B1, B2, Y1, Y2) pour charges de forte puissance,
- deux seconds canaux de distribution électrique (G1, G2) pour les autres charges.

9. Système selon la revendication 8 comprenant :
- un premier coeur regroupant deux premiers canaux de puissance (B1 et B2),
- un second coeur regroupant deux seconds canaux de puissance (Y1 et Y2),
- un troisième coeur regroupant les seconds canaux (G1 et G2) en 230 volts et 115 volts alternatif, et les réseaux 28 volts continus (DC-B et DC-Y), et
- un coeur de secours.

10. Système selon la revendication 8, comprenant un croisement entre générateur-démarreurs et coeurs correspondants en des positions différentes dans le fuselage.

11. Système selon la revendication 1, comprenant :
- quatre premiers canaux de distribution électrique optimisés (B1, B2, Y1, Y2) pour charges de forte puissance,
- deux seconds canaux de distribution électrique (G1, G2) pour les autres charges.

12. Système selon la revendication 11, comprenant quatre générateurs-démarreurs de puissance (SG-B1, SG-Y1, SG-B2, SG-Y2) dédiés aux premiers canaux de puissance optimisés et deux générateurs (G-G1, G-G2).

13. Système selon la revendication 11, comprenant :
- un premier coeur regroupant deux premiers canaux de puissance (B1 et B2), une barre de distribution continu (DC-B12) et un onduleur triphasé (INV-B),
- un second coeur regroupant deux premiers canaux de puissance (Y1 et Y2), une barre de distribution continu (DC-Y12) et un onduleur triphasé (INV-Y),
- un premier demi-coeur (AC1), regroupant les barres de distribution techniques en 115 volts alternatif (AC-B et AC-G1) et des barres de distribution (COM-B et COM-G1),
- un second demi-coeur (AC2) regroupant des barres techniques en 115 volts alternatif (AC-G2 et AC-Y) et des barres de distribution (COM-G2 et COM-Y),
- un troisième demi-coeur (DC1), regroupant des barres de distribution (DC-B, DC-G11 et DC-G1), des convertisseurs de puissance (BBCU-B, BBCU-G1), un transformateur-redresseur (TRU-G1),
- un quatrième demi-coeur (DC2), regroupant des barres de distribution (DC-G2, DC-Y et DC-G22), des convertisseurs de puissance (BBCU-G1, BBCU-Y), un transformateur-redresseur (TRU-G2).

14. Aéronef comportant un système selon l'une quelconque des revendications 1 à 13.

## Patentansprüche

1. Erzeugungs-, Umwandlungs-, Versorgungs- und elektrisches Startsystem an Bord eines Luftfahrzeugs des Typs "Bleedless", d.h. mit elektrischer Leistungsarchitektur ohne Druckluftnetz, **dadurch gekennzeichnet, dass** es enthält:
- mindestens zwei erste elektrische Versorgungskanäle (B, Y) für Lasten großer Leistung, die für die Luftfahrzeuge des Typs "Bleedless" spezifisch sind, wobei die Lasten eine Verschmutzung durch Oberschwingungen erzeugen; und
- mindestens zwei zweite elektrische Versorgungskanäle (G1, G2) für die anderen Lasten, die technische Lasten enthalten, welche eine gute Spannungsqualität erfordern, wie die Luftfahrtelektronik, die Beleuchtung, die Treibstoffpumpen und die gewerbsmäßigen Lasten wie die Bordküchen und die Unterhaltungssysteme für die Passagiere,
wobei die ersten und zweiten Kanäle getrennt sind und von unterschiedlichen Generatoren (SG-B, SG-Y; SG-G1, SG-G2) gespeist werden, die von den Reaktoren (Eng1, Eng2) des Luftfahrzeugs unter normalen Flugbedingungen angetrieben werden.

2. System nach Anspruch 1, wobei die Frequenz der Leistungskanäle zwischen 800 Hz und 2 KHz liegt, und wobei die Frequenz der zweiten Kanäle zwischen 360 Hz und 800 Hz liegt.

3. System nach Anspruch 1, wobei jeder Generator (SG-B, SG-Y) für einen ersten Kanal eine Mehrphasenmaschine ist, deren Anzahl von Phasen größer als oder gleich drei ist.

4. System nach Anspruch 1, das enthält:
- zwei erste elektrische Versorgungskanäle (B, Y) für Lasten großer Leistung,
- zwei zweite elektrische Versorgungskanäle (G1, G2) für die anderen Lasten.

5. System nach Anspruch 4, wobei jeder erste elektrische Versorgungskanal enthält:
- einen elektrischen Starter-Generator (SG-B; SG-Y),
- eine Wechselstrom-Versorgungsschiene (AC-B; AC-Y),
- zwei einfache Gleichrichterbrücken mit sechs Dioden mit verringerter Filterung (RU-B1, RU-B2; RU-Y1, RU-Y2),
- zwei Gleichstrom-Versorgungsschienen (DC-B1, DC-B2; DC-Y1, DC-Y2),
- zwei Wechselrichter mit verringerter Filterung (MCU-B1, MCU-B2; MCU-Y1, MCU-Y2),
- einen Transformator-Gleichrichter (TRU-B, TRU-Y),
- eine Versorgungsschiene (DC-B; DC-Y),
- eine Batterie (BATT-B, BATT-Y).

6. System nach Anspruch 4, wobei jeder zweite elektrische Versorgungskanal enthält:
- einen elektrischen Starter-Generator (SG-G1, SG-G2),
- eine Wechselstrom-Versorgungsschiene (AC-G1; AC-G2),
- einen Wandler (ATU-G1; ATU-G2),
- eine Wechselstrom-Versorgungsschiene (AC-1; AC-2).

7. System nach Anspruch 4, das enthält:
- einen ersten Kern, der zwei erste Leistungskanäle (B1 und B2) zusammenfasst,
- einen zweiten Kern, der zwei zweite Leistungskanäle (Y1 und Y2) zusammenfasst,
- einen dritten Kern, der zweite Kanäle (G1 und G2) mit 230 Volt und 115 Volt Wechselstrom und 28-Volt-Gleichstromnetze (DC-B und DC-Y) zusammenfasst, und
- einen Notkern.

8. System nach Anspruch 1, das enthält:
- vier erste elektrische Versorgungskanäle (B1, B2, Y1, Y2) für Lasten großer Leistung,
- zwei zweite elektrische Versorgungskanäle (G1, G2) für die anderen Lasten.

9. System nach Anspruch 8, das enthält:
- einen ersten Kern, der zwei erste Leistungskanäle (B1 und B2) zusammenfasst,
- einen zweiten Kern, der zwei zweite Leistungskanäle (Y1 und Y2) zusammenfasst,
- einen dritten Kern, der die zweiten Kanäle (G1 und G2) mit 230 Volt und 115 Volt Wechselstrom und die 28-Volt-Gleichstromnetze (DC-B und DC-Y) zusammenfasst, und
- einen Notkern.

10. System nach Anspruch 8, das eine Kreuzung zwischen Starter-Generatoren und entsprechenden Kernen an unterschiedlichen Stellungen im Rumpf enthält.

11. System nach Anspruch 1, das enthält:
- vier erste optimierte elektrische Versorgungskanäle (B1, B2, Y1, Y2) für Lasten großer Leistung,
- zwei zweite elektrische Versorgungskanäle (G1, G2) für die anderen Lasten.

12. System nach Anspruch 11, das vier Leistungs-Starter-Generatoren (SG-B1, SG-Y1, SG-B2, SG-Y2), die den ersten optimierten Leistungskanälen zugeordnet sind, und zwei Generatoren (G-G1, G-G2) enthält.

13. System nach Anspruch 11, das enthält:
- einen ersten Kern, der zwei erste Leistungskanäle (B1 und B2), eine Gleichstrom-Versorgungsschiene (DC-B12) und einen dreiphasigen Wechselrichter (INV-B) zusammenfasst,
- einen zweiten Kern, der zwei erste Leistungskanäle (YI und Y2), eine Gleichstrom-Versorgungsschiene (DC-Y12) und einen dreiphasigen Wechselrichter (INV-Y) zusammenfasst,
- einen ersten Halbkern (AC1), der die technischen Versorgungsschienen mit 115 Volt Wechselstrom (AC-B und AC-G1) und Versorgungsschienen (COM-B und COM-G1) zusammenfasst,
- einen zweiten Halbkern (AC2), der technische Schienen mit 115 Volt Wechselstrom (AC-G2 und AC-Y) und Versorgungsschienen (COM-G2 und COM-Y) zusammenfasst,
- einen dritten Halbkern (DC1), der Versorgungsschienen (DC-B, DC-G11 und DC-G1), Leistungswandler (BBCU-B, BBCU-G1), einen Transformator-Gleichrichter (TRU-G1) zusammenfasst,
- einen vierten Halbkern (DC2), der Versorgungsschienen (DC-G2, DC-Y und DC-G22), Leistungswandler (BBCU-G1, BBCU-Y), einen Transformator-Gleichrichter (TRU-G2) zusammenfasst.

14. Luftfahrzeug, das ein System nach einem der Ansprüche 1 bis 13 aufweist.

## Claims

1. System for electrical generation, conversion, distribution and starting on board an aircraft, of the "bleedless" type, that is, with an electrical power architecture with no pneumatic circuits, **characterised in that** it comprises:
- at least two first electrical distribution channels (B, Y) for high power loads specific to "bleedless" type aircrafts, the loads generating harmonic pollution, and
- at least two second electrical distribution channels (G1, G2) for conventional loads comprising technical loads requiring high quality voltage, such as avionics, lighting, fuel pumps and commercial loads such as catering services and passenger entertainment systems,
in which the first and second channels are separated, and are supplied with power by separate generators (SG-B, SG-Y ; SG-G1, SG-G2) driven by the aircraft's engines (Eng1, Eng2) under normal flight conditions.

2. System according to claim 1 in which the frequency of the power channels is between 800 Hz and 2 KHz and in which the frequency of the conventional channels is between 360 Hz and 800 Hz.

3. System according to claim 1, in which each generator (SG-B, SG-Y) for a first channel is a poly-phase machine for which the number of phases is equal to or greater than three.

4. System according to claim 1 which includes:
- two electrical distribution channels (B, Y) for high power loads,
- two electrical distribution channels (G1, G2) for conventional loads.

5. System according to claim 4 in which each electrical distribution channel for high power loads includes:
- an electric starter-generator (SG-B; SG-Y)
- an AC busbar (AC-B; AC-Y),
- two simple six-diode rectifier bridges with reduced filtering (RU-B1, RU-B2 ; RU-Y1, RU-Y2),
- two DC busbars (DC-B1, DC-B2 ; DC-Y1, DC-Y2),
- two reduced filtering inverters (MCU-B1, MCU-B2 ; MCU-Y1, MCU-Y2),
- a transformer-rectifier (TRU-B, TRU-Y),
- a busbar (DC-B; DC-Y),
- a battery (BATT-B, BATT-Y).

6. System according to claim 4, in which each electrical distribution channel for conventional loads includes:
- an electric starter-generator (SG-G1, SG-G2)
- an AC busbar (AC-G1 ; AC-G2),
- a converter (ATU-G1 ; ATU-G2),
- an AC busbar (AC-1 ; AC-2),

7. System according to claim 4 which includes:
- a first master box which brings together two first power channels (B1 and B2),
- a second master box which brings together two second power channels (Y1 and Y2),
- a third master box which brings together conventional channels (G1 and G2) at 230 volts and 115 volts AC, and 28 volt DC circuits (DC-B et DC-Y), and
- an emergency back-up master box.

8. System according to claim 1 which includes:
- four electrical distribution channels (B1, B2, Y1, Y2) for high power loads,
- two electrical distribution channels (G1, G2) for conventional loads.

9. System according to claim 8 which includes:
- a first master box which brings together two first power channels (B1 and B2),
- a second master box which brings together two second power channels (Y1 and Y2),
- a third master box which brings together the conventional channels (G1 and G2) at 230 volts and 115 volts AC, and the 28 volt DC circuits (DC-B et DC-Y), and
- an emergency back-up master box.

10. System according to claim 8, which includes a crossover between starter-generators and corresponding master boxes at different positions in the fuselage.

11. System according to claim 1 which includes:
- four optimised electrical distribution channels (B1, B2, Y1, Y2) for high power loads,
- two electrical distribution channels (G1, G2) for conventional loads.

12. System according to claim 11 which includes four power starter-generators (SG-B1, SG-Y1, SG-B2, SG-Y2) dedicated to the optimised power channels and two conventional generators (G-G1, G-G2).

13. System according to claim 11 which includes:
- a first master box which brings together two power channels (B1 and B2), a DC busbar (DC-B12) and a three phase inverter (INV-B),
- a second master box which brings together two power channels (Y1 and Y2), a DC busbar (DC-Y12) and a three phase inverter (INV-Y),
- a first half-panel (AC1) which brings together the technical busbars at 115 volts AC (AC-B and AC-G1), and commercial busbars (COM-B and COM-G1),
- a second half-panel (AC2) which brings together the technical busbars at 115 volts AC (AC-G2 and AC-Y) and commercial busbars (COM-G2 and COM-Y),
- A third half-panel (DC1) which brings together busbars (DC-B, DC-G11 and DC-G1), power converters (BBCU-B, BBCU-G1), a transformer rectifier (TRU-G1),
- A fourth half-panel (DC2), which brings together busbars (DC-G2, DC-Y and DC-G22), power converters (BBCU-G1, BBCU-Y), a transformer rectifier (TRU-G2),

14. Aircraft which includes a system according to any of claims 1 to 13 whatsoever.
